# EUROPEAN PATENT SPECIFICATION

(11) **EP 1 410 966 B1**
(45) Date of publication and mention of the grant of the patent: **30.11.2005**
(21) Application number: 02732777.4
(22) Date of filing: 27.05.2002
(51) Int. Cl.: B60S 1/48, F04D 29/70

(54) **FILTER FOR ELECTRICALLY-DRIVEN PUMPS FOR MOTOR VEHICLE WINDSCREEN WASHER SYSTEMS**
FILTER FÜR ELEKTRISCH ANGETRIEBENE PUMPEN FÜR KRAFTFAHRZEUGWINDSCHUTZSCHEIBENWASCHANLAGEN
FILTRE POUR ELECTROPOMPES D'INSTALLATIONS D'ESSUIE-GLACE DE VEHICULES AUTOMOBILES

(30) Priority: 03.07.2001 ES 200101541
(43) Date of publication of application: 21.04.2004
(73) Proprietor: FICO TRANSPAR, S.A., 08022 Barcelona (ES)
(72) Inventor: PUJOL ARTIGAS, Mercedes, E-08028 Barcelona (ES); MOTA LOPEZ, Miguel, E-08191 Rubi (ES)
(74) Representative: SUGRANES - VERDONCES - FERREGÜELA
(86) International application number: PCT/ES2002/000249
(87) International publication number: WO 2003/004326

(56) References cited:
- EP-A- 1 088 721
- DE-A- 3 730 567
- DE-A- 4 434 800
- ES-B3- 2 024 486

## Description

### Technical sector of the invention

The object of the invention is a filter for electric pumps of motor vehicle windscreen washer systems.

### Background to the invention

It is well known that motor vehicle window washer systems essentially comprise a cleaning liquid deposit arranged, for example, in the motor compartment, a cleaning liquid suction-impelling electric pump, the cleaning liquid deposit being coupled, and some conduits for connecting the output of the electric pump with the jets which squirt the cleaning liquid onto the windscreen, rear window, etc. It is common practice for the electric pump to have a suction tubular extension, which vertically goes through one wall of the cleaning liquid deposit and is arranged within the latter.

The coupling of the electric pump to the deposit is done by securing means, which are coupled to an orifice in the deposit wall and which go through the suction tubular projection of the electric pump by means of tightening; in addition, to avoid the intake of solid bodies in suspension in the cleaning liquid cavity there is a filtering element of the liquid sucked in by the electric pump. In general, the assembly formed by said securing means and filtering element is designated as the filter.

As an example of an embodiment of filter for electric pumps for windscreen washers it is worth mentioning the one described in the publication of EP 0 792 780 of the same applicant, in which its constituent elements, that is, its securing means and a filtering element, are formed by a single body.

Document US-A-4824021 describes a filter for electric pumps of motor vehicle windscreen having a tubular projection comprising a first and a second cylindrical portions connected coaxially. The orifice of said portions are of different section and only the lower end area of the projection, formed by one of the portions, has an interior filtering tubular mesh as a sieve element.

Generally speaking, the main drawbacks of the disclosed embodiments of filters is that they have a high production cost and/or that of requiring, at the manufacturing place, several workings on the electric pump during the priming of the windscreen washer system.

### Explanation of the invention

With the aim of providing a solution to the previously described problems which known embodiments of filters for electric pumps of windscreen washer systems present, a filter with a new structure and functionality is herein disclosed.

The filter for electric pumps in window washer systems for motor vehicles object of the invention, comprises a first essentially cylindrical portion, which connects co-axially with a second portion that is also essentially cylindrical and smaller in diameter, said first and second portions being pierced co-axially by an orifice which forms a mouth in the first portion and a bottom in the second portion; the second portion having two suction vents, which are identical and diametrically arranged to one another and an interior and co-axial filtering tubular mesh. Such a filter is known from US-A-4 824 021.

According to the invention, the filter is characterised in that said first and second portions are part of a body, the orifice of said first and second portions being of a constant section, and in that the interior diameter of the filtering mesh coincides with the diameter of the orifice, that axially goes through both first and second portions.

According to an embodiment of the filter of the invention, the suction vents extend between the first portion and the bottom of the second portion.

Another embodiment of the invention is that one end of the filtering mesh is included in the first portion, whereas the other end is included in the bottom of the second portion.

Another embodiment of the invention consists of the fact that the connection between the first and second portions forms a truncated-cone shaped portion.

It is also an embodiment of the filter of the invention that the first portion is provided with a cantilevered outer annular perimeter portion.

### Brief description of the drawings

In the attached drawings a form of embodiment of the filter for electric pumps of motor vehicle windscreen washer systems object of the invention is illustrated by way of non-limiting example. In said drawings:
Fig. 1 is a side view of the filter according to the invention;
Fig. 2 is the view corresponding to section II-II of Fig. 1; and
Fig. 3 is the view corresponding to section III-III of Fig. 1.

### Detailed description of the drawings

The filter 1 for electric pumps of motor vehicle windscreen washer systems, which is represented as an embodiment example, comprises a single-piece member 2 and a filtering tubular mesh 3, which can be mutually coupled.

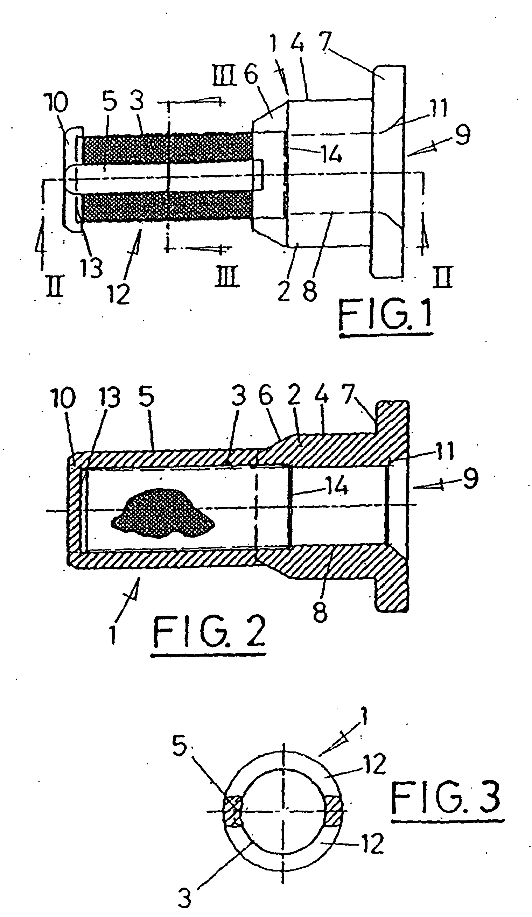

In Figs 1 and 2 it can be appreciated that the single-piece member 2 comprises an essentially cylindrical first portion 4, which connects co-axially with a second portion 5, which is also essentially cylindrical and smaller in diameter than the first portion 4, said connection forming a truncated-cone shaped portion 6. The outer end of the first portion 4 is provided with a cantilevered annular perimeter portion 7. The first cylindrical portion 4 and the perimeter portion 7 determine the securing means of the filter 1 to an orifice made to that end in a cleaning liquid deposit for windscreen washer systems which, for the purposes of simplification, have not been represented.

In Fig. 2 it can be appreciated that the first portion 4 and the second portion 5 axially go through a circular orifice 8, which in the first cylindrical portion 4, forms an input mouth 9, and in the second cylindrical portion 5, a bottom 10. The mouth 9 has a chamfering 11 and the axial orifice 8 is dimensioned for receiving by tightening the tubular suction extension of an electric pump which, for the previously indicated reasons, have not been represented, the mouth 9 being intended for easing the entry into the axial orifice 8 of said tubular suction extension during the coupling of the electric pump to the filter 1.

The second cylindrical portion 5 is provided with two suction apertures 12, equal to one another and diametrically arranged with respect to each other as can be appreciated in Figs. 1 and 3. Both suction apertures 12 extend between the inner end of the first cylindrical portion 4 and the bottom 10 of the second cylindrical portion 5.

In Figs. 1 and 2 it can be appreciated that the filtering tubular mesh 3 is arranged in the inside of the second cylindrical portion 5 and co-axially with respect to the same and as a consequence also co-axially arranged with respect to the first cylindrical portion 4, the inner diameter of the filtering tubular mesh 3 being coincident with the diameter of the orifice 8 that goes through both portions 4 and 5. One end 13 of the filtering tubular mesh 3 is fitted into the bottom 10 of the second cylindrical portion 5 and the other end 14 is fitted into the first cylindrical portion 4. With this arrangement, the coupling of said electric pump to the filter 1 is done in such a way that its suction tubular extension is situated with its suction end arranged next to the bottom 10 and facing the suction apertures 12, with the interposition of the filtering tubular mesh 3.

Preferentially, the filtering tubular mesh is obtained from poly-propylene with a thread of thickness of 165 µm and a span of 210 µm.

From the tests carried out by the inventor, the arrangement of the filter for electric pumps of motor vehicle windscreen washer systems object of the invention and which has been described as an embodiment example, makes the priming of the windscreen washer system easy, without the need to repeatedly operate on the electric pump. In addition, the structure of the filter described enables it to be produced at a lower cost than known filter embodiments.

## Claims

1. Filter for electric pumps of motor vehicle windscreen washer systems, having a first essentially cylindrical portion (4), which connects co-axially with a second portion (5) that is also essentially cylindrical and smaller in diameter, said first (4) and second (5) portions being pierced co-axially by an orifice (8) which forms a mouth (9) in the first portion (4) and a bottom (10) in the second portion (5), the second portion (5) having two suction vents (12), which are identical and diametrically arranged to one another, and an interior and co-axial filtering tubular mesh (3), **characterised in that** the first (4) and second (5) portions are part of a body (2), the orifice (8) of said first (4) and second (5) portions being of a constant section, and **in that** the interior diameter of the filtering mesh (3) coincides with the diameter of the orifice (8), that axially goes through both first (4) and second (5) portions.

2. Filter for electric pumps according to claim 1, which is **characterised in that** the suction vents (12) extend between the first portion (4) and the bottom (10) of the second portion (5).

3. Filter for electric pumps according to claim 1, which is **characterised in that** one end (14) of the tubular filtering mesh (3) is fitted into the first portion (4), whereas the other end (13) is fitted into the bottom (10) of the second portion (5).

4. Filter for electric pumps according to claim 1, which is **characterised in that** the connection between the first (4) and second (5) portions forms a truncated-cone shaped portion (6).

5. Filter for electric pumps according to claim 1, which is **characterised in that** the first portion (4) is provided with a cantilevered outer annular perimeter portion (7).

## Patentansprüche

1. Filter für elektrische Pumpen von Kraftfahrzeugwindschutzschelbenwaschanlagen, mit einem im Wesentlichen zylindrischen ersten Teil (4), der koaxial mit einem zweiten Teil (5) verbunden ist, der ebenfalls im Wesentlichen zylindrisch, aber kleiner im Durchmesser ausgebildet ist, wobei der erste (4) und der zweite (5) Teil koaxial von einer Ausnehmung (8) durchsetzt sind, die im ersten Teil (4) eine Mündung (9) und im zweiten Teil (5) einen Boden (10) aufweist, wobei der zweite Teil (5) zwei Ansaugöffnungen (12), die identisch ausgebildet und diametral zueinander angeordnet sind, und ein inneres und koaxiales filterndes Röhrensieb (3) aufweist,
**dadurch gekennzeichnet, dass** der erste (4) und zweite (5) Teil ein Teil eines Gehäuses (2) sind, wobei die Ausnehmung (8) des ersten (4) und zweiten (5) Teils einen konstanten Querschnitt aufweist, und dass der innere Durchmesser des Filtersiebs (3) übereinstimmt mit dem Durchmesser der Ausnehmung (8), die sich axial sowohl durch den ersten (4) als auch durch den zweiten (5) Teil erstreckt.

2. Filter für elektrische Pumpen nach Anspruch 1, **dadurch gekennzeichnet, dass** die Ansaugöffnungen (12) sich zwischen dem ersten Teil (4) und dem Boden (10) des zweiten Teils (5) erstrecken.

3. Filter für elektrische Pumpen nach Anspruch 1, **dadurch gekennzeichnet, dass** ein Ende (14) des filternden Röhrensiebes (3) in den ersten Teil (4) eingesetzt ist, wobei das andere Ende (13) in den Boden (10) des zweiten Teils (5) eingesetzt ist.

4. Filter für elektrische Pumpen nach Anspruch 1, **dadurch gekennzeichnet, dass** die Verbindung zwischen dem ersten (4) und zweiten (5) Teil einen Abschnitt (6) in der Form eines Kegelstumpfes bildet.

5. Filter für elektrische Pumpen nach Anspruch 1, **dadurch gekennzeichnet, dass** der erste Teil (4) mit einem freistehenden ringförmigen äußeren Umfang (7) versehen ist.

## Revendications

1. Filtre pour pompes électriques de systèmes de lavage de pare-brise de véhicule motorisé, comprenant une première partie (4) sensiblement cylindrique, qui se connecte co-axialement avec une deuxième partie (5), également sensiblement cylindrique et de plus petit diamètre, lesdites première (4) et deuxième (5) parties étant transpercées co-axialement par un orifice (8) qui forme une embouchure (9) dans la première partie (4) et un fond (10) dans la deuxième partie (5), la deuxième partie (5) comprenant deux lumières d'aspiration (12) qui sont identiques et agencées diamétralement l'une par rapport à l'autre, et un tamis tubulaire de filtrage (3) intérieur et co-axial, **caractérisé en ce que** les première (4) et deuxième (5) parties font partie d'un corps (2), l'orifice (8) des dites première (4) et deuxième (5) parties étant de section constante, et **en ce que** le diamètre intérieur du tamis de filtrage (3) coïncide avec le diamètre de l'orifice (8), qui traverse axialement à la fois les première (4) et deuxième (5) parties.

2. Filtre pour pompes électriques selon la revendication 1, **caractérisé en ce que** les lumières d'aspiration (12) s'étendent entre la première partie (4) et le fond (10) de la deuxième partie (5).

3. Filtre pour pompes électriques selon la revendication 1, **caractérisé en ce qu'**une extrémité (14) du tamis de filtrage tubulaire (3) est montée dans la première partie (4), tandis que l'autre extrémité (13) est montée dans le fond (10) de la deuxième partie (5).

4. Filtre pour pompes électriques selon la revendication 1, **caractérisé en ce que** la liaison entre les première (4) et deuxième (5) parties forme une partie (6) de forme tronconique.

5. Filtre pour pompes électriques selon la revendication 1, **caractérisé en ce que** la première partie (4) est munie d'une partie périphérique (7) annulaire en saillie
